# EUROPÄISCHE PATENTSCHRIFT

(11) **EP 3 268 428 B1**
(45) Veröffentlichungstag und Bekanntmachung des Hinweises auf die Patenterteilung: **25.08.2021**
(21) Anmeldenummer: 16710124.5
(22) Anmeldetag: 09.03.2016
(51) Int. Cl.: C08L 23/12, C09J 9/00, C08J 3/12, B29B 9/12, C08L 91/06, B29K 105/00, B29B 9/06, B29B 9/16, B29C 48/04

(54) **HÜLLENMATERIAL FÜR HAFTKLEBRIGE SCHMELZKLEBSTOFFE**
COVERING MATERIAL FOR ADHESIVE HOT-MELT GLUES
MATIÈRE D'ENVELOPPE POUR ADHÉSIFS THERMOFUSIBLES AUTOCOLLANTS

(30) Priorität: 12.03.2015 DE 102015204468
(43) Veröffentlichungstag der Anmeldung: 17.01.2018
(73) Patentinhaber: Henkel AG & Co. KGaA, 40589 Düsseldorf (DE)
(72) Erfinder: HEEMANN, Marcus, 41468 Neuss (DE); KOSTYRA, Sebastian, 40789 Monheim (DE); PÜRKNER, Eckhard, 40595 Düsseldorf (DE); PETRY, Gerald, 41836 Hückelhoven (DE); DAVIS, Riju, 86830 Schwabmünchen (DE)
(86) Internationale Anmeldenummer: PCT/EP2016/055018
(87) Internationale Veröffentlichungsnummer: WO 2016/142422

(56) Entgegenhaltungen:
- WO-A2-2014/194087
- US-A1- 2006 093 764
- US-A1- 2013 143 997

## Beschreibung

Die Erfindung betrifft Schmelzklebstoffe in Form von Pellets, welche einen Schmelzklebstoffkern aufweisen, welcher haftklebrig ist, und die mit einem speziellen nicht haftklebrigen Hüllenmaterial aus einem polymeren Film ummantelt sind und mittels Koextrusion von Schmelzklebstoffkern und Hüllenmaterial herstellbar sind. Die derartigen resultierenden Schmelzklebstoffpellets sind durch ihre geringe Größe und die geringe bzw. nicht vorhandene Oberflächenhaftklebrigkeit für automatische Dosiersysteme beim Endanwender geeignet und zeichnen sich ferner dadurch aus, dass das Hüllenmaterial die Eigenschaften des resultierenden Schmelzklebstoffs, insbesondere dessen Verarbeitbarkeit, nicht negativ beeinflusst, gute Barriereeigenschaften gegenüber niedermolekularen Bestandteilen des Schmelzklebstoffkerns aufweist und auf Rohstoffen basiert, die für die Endanwendung zugelassen sind, z.B. für die Lebensmittelverpackung zugelassen sind. Weiterhin werden geeignete Verwendungen für derartige Schmelzklebstoffe, Verfahren zu deren Anwendung und Produkte die diese Klebstoffe enthalten beschrieben.

Schmelzklebstoffe, die mit einem nicht haftklebrigen filmbildenden Material (Hüllenmaterial) ummantelt sind, sind beispielsweise aus der US Patentschrift 2013/0143997 A1 und US 2006/093764 A1 bekannt.

Die US 2006/093764 A1 offenbart unter anderem eine Verpackung, umfassend: eine Kunststoffmasse mit einer endlichen Größe und Form; und einen Polymerfilm, der die Kunststoffmasse umgibt, wobei der Polymerfilm eine Zusammensetzung aufweist, umfassend: mindestens etwa 25 Gew.-% eines Wachsmaterials; etwa 5 Gew .-% bis etwa 65 Gew .-% eines teilkristallinen Polymers auf Ethylenbasis, umfassend ein Homopolymer, ein Copolymer, ein Terpolymer oder ein Interpolymer mit einem Schmelzindex von 0,05 g/10 min bis 800 g/10 min bei 190 °C und einem DSC-Schmelzpunkt von 40 °C bis 130 °C; etwa 0 Gew.-% bis etwa 40 Gew.-% eines thermoplastischen elastomeren Blockcopolymers mit einer Struktur AB, A-B-A, A-(B-A)ₙ-B oder (A-B)ₙ-Y, wobei A einen aromatischen Polyvinylblock mit einer T_{g} höher als 80°C aufweist, B einen gummiartigen Mittelblock mit einer T_{g} von weniger als -10°C umfasst, Y eine mehrwertige Verbindung umfasst und n ist eine ganze Zahl von mindestens 3; etwa 0 Gew.-% bis etwa 25 Gew.-% eines Elastomers, umfassend ein Copolymer oder Terpolymer mit einer T_{g} von weniger als -10 °C, wobei das Elastomer ausgewählt ist aus der Gruppe, bestehend aus einem Elastomer auf Ethylenbasis, einem Elastomer auf Propylenbasis und Mischungen von Elastomeren auf Ethylen basierten und Propylen basierten Elastomeren; wobei die Menge an teilkristallinem Polymer auf Ethylenbasis, thermoplastischem elastomerem Blockcopolymer und Elastomer etwa 30% oder mehr der gesamten Filmzusammensetzung umfasst; und wobei die Filmzusammensetzung eine Schmelzenthalpie von mindestens etwa 100 J/g und einen Bruchdehnungswert von mindestens etwa 100% aufweist.

Derartige Schmelzklebstoffe in Pelletform haben den Vorteil, dass die Oberflächenbeschichtung das Verkleben der einzelnen Schmelzklebstoffpellets während der Herstellung, dem Transport und der Lagerung verhindert, wobei die Pelletform eine einfache Dosierung und Handhabung erlaubt.

Die bekannten Hüllenmaterialien haben allerdings den Nachteil, dass sie einen deutlichen Einfluss auf die Verarbeitbarkeit der resultierenden Schmelzklebstoffpellets haben, indem sie beispielweise die rheologischen Eigenschaften derart verändern, dass für die Verarbeitung des Schmelzklebstoffs über Düsensysteme (Sprühbarkeit) deutlich höhere Temperaturen, typischerweise um etwa 20K höhere Temperaturen, notwendig sind als für den Klebstoff ohne Hüllenmaterial.

Es besteht daher die Aufgabe, verbesserte Polymerzusammensetzungen, welche als Hüllenmaterial geeignet sind, bereitzustellen, die auf der einen Seite die Herstellung, den Transport und die Lagerung von haftklebrigen Schmelzklebstoffen in granulierter Form die automatisiert dosiert werden können, ermöglichen, und auf der anderen Seite beim Schmelzen mit dem Schmelzklebstoffkern homogen mischbar sind und dessen Verarbeitungseigenschaften nicht nachteilig beeinflussen. Derartige Polymerzusammensetzungen haben daher vorteilhafterweise folgende Eigenschaften:
- Geringe bzw. nicht haftklebrige Oberfläche
- Verträglichkeit (inkl. homogene Mischbarkeit) mit dem zu ummantelnden Schmelzklebstoff
- Weniger oder kein nachteiliger Einfluss auf die Verarbeitbarkeit des Schmelzklebstoffs
- Gute Barriereeigenschaften gegenüber niedermolekularen Bestandteilen des Schmelzklebstoffs, wie z.B. Weichmacheröle
- Basieren auf Rohstoffen, die für die Endanwendung, wie beispielsweise im Lebensmittelverpackungsbereich, zugelassen sind.

Die vorliegende Erfindung löst diese Aufgabe durch die Bereitstellung einer Polymerzusammensetzung, die mit olefin-basierten Haftklebstoffen verträglich ist und alle oben genannten Eigenschaften erfüllt. Insbesondere erlaubt es die Verarbeitung der Schmelzklebstoffpellets über Düsensysteme (d.h. das Sprühen) ohne Einschränkungen und Anpassungen gegenüber dem Schmelzklebstoff ohne das entsprechende Hüllenmaterial.

In einem ersten Aspekt betrifft die vorliegende Erfindung daher eine Polymerzusammensetzung, die bezogen auf ihr Gesamtgewicht:
a) 5 bis 40 Gew.-%, insbesondere 10 bis 20 Gew.-%, mindestens eines Fischer-Tropsch-Wachses mit einem Schmelzpunkt >95 °C;
b) 30 bis 70 Gew.-%, insbesondere 40 bis 65 Gew.-%, mindestens eines Metallocen-katalysierten Polyolefins, insbesondere Polypropylens, mit einem Erweichungspunkt >95°C und einem Schmelzflussindex (MFI) (230°C, 2,16kg) von ≤1000 und ≥300 g/10 Minuten
c) 20 bis 40 Gew.-% mindestens eines Metallocen-katalysierten Polyolefins, insbesondere Polypropylens, mit einem Erweichungspunkt >85°C und einem Schmelzflussindex (MFI) (230°C, 2,16kg) von >1000 g/10 Minuten;
d) 0 bis 40 Gew.-% mindestens eines Metallocen-katalysierten Polyolefins, insbesondere Polypropylens, mit einem Erweichungspunkt >115°C und einem Schmelzflussindex (MFI) (230°C, 2,16kg) von <300 g/10 Minuten;
e) 0 bis 60 Gew.-% mindestens eines Polyolefins, insbesondere eines Metallocen-katalysierten Polyolefins, dass von b) bis d) verschieden ist, mit einem Molekulargewicht Mₙ <140.000 g/mol; und
f) 0 bis 20 Gew.-% Additive und Zusatzstoffe ausgewählt aus Antioxidantien, Stabilisatoren, Weichmachern, anderen Polymeren oder einer Kombination davon umfasst.

In einem weiteren Aspekt betrifft die Erfindung einen Schmelzklebstoff in Form eines Pellets, umfassend:
(1) einen Kern aus einem Schmelzklebstoff mit einem Erweichungspunkt von 65 bis 140°C, enthaltend mindestens ein Polyolefin und mindestens ein klebrig machendes Harz; und
(2) einen Film aus einer Polymerzusammensetzung gemäß der Erfindung, die den Kern im Wesentlichen vollständig umhüllt und vorzugsweise bei einer Temperatur von 20 °C bis 60°C nicht haftklebrig ist.

Weitere Aspekte der Erfindung betreffen die Verwendung der hierin beschriebenen Schmelzklebstoffpellets als Haftklebstoffe, beispielsweise zum Verkleben von folienförmigen Substraten mit Nonwovens, sowie ein Verfahren zur Beschickung einer Schmelzvorrichtung mit einem Schmelzklebstoff, umfassend Zuführung eines oder mehrerer Schmelzklebstoffpellets wie hierin beschrieben in die Schmelzvorrichtung mittels einer Fördervorrichtung, insbesondere Vakuumfördervorrichtung.

Die im vorliegenden Text angegebenen Molekulargewichte beziehen sich, soweit nicht anders angegeben, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind. Als Referenz werden Polystyrole verwendet.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polymer" bedeutet somit beispielsweise mindestens eine Art von Polymer, d.h. dass eine Art von Polymer oder eine Mischung mehrerer verschiedener Polymere verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Der Begriff "im Wesentlichen" gemäß der vorliegenden Erfindung entspricht 97%, bevorzugt 98%, stärker bevorzugt 99%, am stärksten bevorzugt 100% des jeweiligen Wertes auf den er sich bezieht. Zum Beispiel ist unter "im Wesentlichen vollständig umhüllt" zu verstehen, dass mindestens 97% des Kerns aus dem haftklebrigen Schmelzklebstoff von dem Film der Polymerzusammensetzung der vorliegenden Erfindung umhüllt sind.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

Der Schmelzpunkt, wie hierin verwendet, kann mittels DSC (Dynamische Differenzkalorimetrie, EN differential scanning calorimetry) nach ISO 11357-3:2011 bestimmt werden. Sofern nicht anders angegeben, beziehen sich die hierin beschriebenen Werte auf die mit diesem Verfahren ermittelten Werte.

Der Erweichungspunkt, wie hierin verwendet, kann mittels der Ring und Kugel Methode gemäß ISO 4625-1:2004 bestimmt werden. Sofern nicht anders angegeben, beziehen sich die hierin beschriebenen Werte auf die mit diesem Verfahren ermittelten Werte.

Der Schmelzflussindex (EN melt flow index, MFI), wie hierin verwendet, kann mittels der Methode nach DIN EN ISO 1133 bzw. ASTM D1238 bei einer Prüftemperatur von 230°C und einem Prüfgewicht von 2,16 kg ermittelt werden. Sofern nicht anders angegeben, beziehen sich die hierin beschriebenen Werte auf die mit diesem Verfahren ermittelten Werte.

Der Ausdruck "Pellet", wie hierin verwendet, schließt kleine Körper des Schmelzklebstoffs mit symmetrischer oder asymmetrischer Form mit einem Gewicht von bis zu 15 g, vorzugsweise bis 10 g, noch bevorzugter bis 5 g ein. Die Größe der Pellets beträgt maximal 25 mm, vorzugsweise bis 20 mm, in alle Richtungen, vorzugsweise in der größten Ausdehnung und mindestens 1 mm, vorzugsweise 3 mm, in Richtung der kleinsten Ausdehnung. Die Form der Pellets kann abhängig vom Herstellungsprozess variieren. So können die Pellets kissenförmig, beispielsweise mit Abmessungen von ungefähr 15mmx5mmx5mm, annähernd sphärisch, beispielsweise kugelförmig ggf. mit einem Durchmesser von 10 bis 20 mm, oder zylindrisch, beispielsweise mit einer Länge von 25 mm und einem Durchmesser von 2 bis 10 mm sein. Die Form muss nicht gleichmäßig sein, so können sphärische Formen beispielsweise gestaucht oder gestreckt sein. Die Pellets können ein Mischung von Pellets unterschiedlicher Formen sein, es ist allerdings bevorzugt, dass sie alle annähernd gleich geformt sind. Kleinere Pellets haben typischerweise bessere Fließeigenschaften.

Die Polymerzusammensetzung und die Schmelzklebstoffpellets gemäß der Erfindung sind an der Oberfläche nicht haftklebrig. Dabei ist "nicht haftklebrig" gemäß der vorliegenden Erfindung definiert als "frei fließend" bei einer Temperatur von 20 bis 60°C. "Frei fließend" bedeutet, dass bei der angegebenen Temperatur (20 bis zu 60°C) eine größere Menge der Schmelzklebstoffpellets oder der Polymerzusammensetzung (ebenfalls als Pellets) unter Einfluss der Schwerkraft durch eine senkrechte Röhre mit einem Durchmesser von 10 cm und einer Länge von 50 cm fließen, wobei kein Festkleben, Verklumpen oder Blockieren der Röhre beobachtet wird. Diese Eigenschaft soll auch nach längerer Lagerung bei erhöhter Temperatur erhalten bleiben. Dies wird wie folgt getestet: Eine Röhre mit 10 cm Durchmesser aus Metall oder Kunststoff wird bis zu einer Höhe von 10 cm mit den Pellets (vorzugsweise jeweils in einer Größe von 15mmx5mmx5mm) gefüllt. Dann wird eine Platte mit einem 500 g Gewicht auf den Pellets platziert und die Testvorrichtung bei 60°C bzw. 20 °C für 7 Tage in einem Ofen gelagert. Nach diesem Zeitraum werden die Pellets, falls nötig, auf 20°C abgekühlt und mit der oben beschriebenen Methode auf ihre Fließeigenschaften (Schütten in eine senkrechte Röhre mit einem Durchmesser von 10 cm und einer Länge von 50 cm) getestet.

Die filmbildenden, nicht haftklebrigen Polymerzusammensetzungen der Erfindung, die hierin auch als "Hüllenmaterial", "filmbildende Polymerzusammensetzungen" oder "filmbildende Zusammensetzung" bezeichnet wird, enthalten mindestens ein Wachs, wobei es sich bei diesem Wachs um ein Fischer-Tropsch-Wachs mit einem Schmelzpunkt von mehr als 95°C handelt. Fischer-Tropsch-Wachse, wie hierin verwendet, sind mittels des Fischer-Tropsch-Verfahrens hergestellte synthetische Wachse, die aus Kohlenwasserstoffen bestehen. In verschiedenen Ausführungsformen handelt es sich bei den Wachsen um synthetische Paraffine. Diese bestehen im Unterschied zu mineralölstämmigen Produkten überwiegend aus unverzweigten *n*-Alkanen.

Die Wachse werden in den Polymerzusammensetzungen in Mengen von 5 bis 40 Gew.-%, vorzugsweise 10 bis 20 Gew.-%, besonders bevorzugt 13-17 Gew.-%, noch bevorzugter ungefähr 15 Gew.-%, jeweils bezogen auf das Gesamtgewicht der Zusammensetzung, eingesetzt.

Des Weiteren enthalten die filmbildenden Zusammensetzungen mindestens ein Polyolefin, das mittels Metallocen-katalysierte Polymerisation erhältlich ist. Bei den Monomeren, die zur Herstellung des Polyolefins eingesetzt werden handelt es sich insbesondere um Propylen, d.h. das Polyolefin ist in verschiedenen Ausführungsformen ein Polypropylen. Alternativ können aber auch Ethylen oder bekannte mit Ethylen oder Propylen copolymerisierbare C₄ bis C₂₀-Olefin-Monomere eingesetzt werden. Bei den copolymerisierbaren Monomeren handelt es sich insbesondere um lineare oder verzweigte C₄ bis C₂₀-Olefine, die auch als α-Olefine bezeichnet werden, wie Buten, Hexen, Methylpenten, Octen; cyclisch ungesättigte Verbindungen wie Norbonen oder Norbonadien; symmetrisch oder unsymmetrisch substituierte Ethylen-Derivate, wobei als Substituenten C₁ bis C₁₂-Alkylreste geeignet sind; sowie ggf. ungesättigte Carbonsäuren oder Carbonsäureanhydride. Generell kann es sich bei den Polyolefinen, die erfindungsgemäß eingesetzt werden, um Homopolymere, Copolymere, Terpolymere handeln, die auch weitere Monomere enthalten können. Bevorzugt sind allerdings Homopolymere, insbesondere Polypropylen-Homopolymere.

Eine wichtige Eigenschaft der in dem Hüllenmaterial eingesetzten Polyolefine ist ihre Viskosität. Da es sich um aufschmelzbare Massen handelt, die als Schmelze eingesetzt werden, wird die Viskosität gemessen als MFI angegeben. Die erfindungsgemäß eingesetzten Polyolefine haben einen Erweichungspunkt von > 95°C (ISO 4625) und einen MFI zwischen 300 und 1000 g/10 Minuten (gemessen bei einer Temperatur von 230°C und einem Prüfgewicht von 2,16 kg gemäß ISO 1133). In bevorzugten Ausführungsformen liegt der MFI zwischen 350 und 1000 g/10 Minuten oder zwischen 400 und 1000 g/10 Minuten. Das Molekulargewicht dieser Polyolefine liegt üblicherweise unter 100000 g/mol, insbesondere unter 90000 g/mol, ganz besonders bevorzugt unter 80000 g/mol. Die Untergrenze beträgt 50000 g/mol (zahlenmittleres Molekulargewicht, wie über GPC bestimmbar). Diese Polymere zeichnen sich dadurch aus, dass sie eine enge Molekulargewichtsverteilung aufweisen. Solche Polymere sind in der Literatur bekannt und können von verschiedenen Herstellern kommerziell erhalten werden. Ein geeignetes Polymer ist beispielsweise unter dem Handelsnamen L-Modu™ S600 (Idemitsu Kosan Co., Ltd.) erhältlich. Dieses Polyolefin hat einen MFI von 350, ein Molekulargewicht von 70000 g/mol und einen Erweichungspunkt von 100°C.

Das Polyolefin mit einem Erweichungspunkt von > 95°C Polymerzusammensetzung in Mengen von 30 bis 70 Gew.-%, vorzugsweise 40 bis 65 Gew.-%, noch bevorzugter 55 bis 65 Gew.-% eingesetzt.

Zusätzlich zu dem oben beschriebenen Polyolefin können weitere mittels Metallocen-Katalyse erhältliche Polyolefine eingesetzt werden. "Metallocen-Katalyse" oder "Metallocen-katalysierte Polymerisation", wie hierin austauschbar verwendet, bezeichnet die durch Verwendung von Metallocenen als Katalysator katalysierte Polymerisation von Olefinen. Dadurch lassen sich beispielsweise streng isotaktische Polypropylene herstellen.

Zusätzlich zu dem oben beschriebenen Polyolefin wird ein Polyolefin das mittels Metallocen-Katalyse erhältlich ist mit einem Erweichungspunkt >85°C und einem Schmelzflussindex (MFI) (230°C, 2,16kg) von >1000 g/10 Minuten eingesetzt. Das Polyolefin kann wie oben definiert sein, ist aber vorzugsweise ein Polypropylen. Das Molekulargewicht dieser Polyolefine liegt üblicherweise unter 50000 g/mol (zahlenmittleres Molekulargewicht, wie über GPC bestimmbar). Diese Polyolefine werden in Mengen von 20 bis 40 Gew.-%, bevorzugt 22-27 Gew.-%, am bevorzugtesten ungefähr 25 Gew.-%, jeweils bezogen auf die Polymerzusammensetzung, eingesetzt. Ein geeignetes Polyolefin ist beispielsweise unter dem Handelsnamen L-Modu™ S400 (Idemitsu Kosan Co., Ltd.) erhältlich. Dieses Polyolefin hat einen MFI von ca. 2000, ein Molekulargewicht von 45000 g/mol und einen Erweichungspunkt von 90°C.

In bevorzugten Ausführungsformen kann zusätzlich zu dem oben beschriebenen Polyolefin oder Polyolefinen beispielsweise ein Polyolefin das mittels Metallocen-Katalyse erhältlich ist mit einem Erweichungspunkt >115°C und einem Schmelzflussindex (MFI) (230°C, 2,16kg) von <300 g/10 Minuten eingesetzt werden. Das Polyolefin kann wie oben definiert sein, ist aber vorzugsweise ein Polypropylen. Das Molekulargewicht dieser Polyolefine liegt üblicherweise über 100000 g/mol aber unter 200000 g/mol (zahlenmittleres Molekulargewicht, wie über GPC bestimmbar). Diese Polyolefine werden vorzugsweise in Mengen von 0 bis 40 Gew.-% bezogen auf die Polymerzusammensetzung, eingesetzt. Ein geeignetes Polyolefin ist beispielsweise unter dem Handelsnamen L-Modu™ S901 (Idemitsu Kosan Co., Ltd.) erhältlich. Dieses Polyolefin hat einen MFI von ca. 50, ein Molekulargewicht von 120000 g/mol und einen Erweichungspunkt von 120°C.

Weitere Polymere, die in den filmbildenden Polymerzusammensetzungen enthalten sein können schließen weitere Polyolefine, beispielsweise mindestens ein Metallocen-katalysiertes Polyolefin, mit einem Molekulargewicht Mₙ <140.000 g/mol, ein. Diese könne in Mengen von 0 bis 60 Gew.-% bezogen auf das Gesamtgewicht des Hüllenmaterials in diesem enthalten sein.

Die filmbildenden Zusammensetzungen, die erfindungsgemäß als Hüllenmaterial eingesetzt werden, können ferner auch 0 bis 20 Gew.-% Zusatz- und Hilfsstoffe enthalten, die als solche im Stand der Technik bekannt sind. Insbesondere werden derartige Additive und Zusatzstoffe ausgewählt aus Antioxidantien, Stabilisatoren, Weichmachern, anderen Polymeren oder einer Kombination davon.

Geeignete Weichmacher werden unten beschrieben und schließen insbesondere Kohlenwasserstofföle, wie Paraffin-, naphthenische und/oder Mineralöle und Poly(iso)butylen ein. Die Weichmacher können dazu beitragen, beim Schmelzen und der Anwendung der Schmelzklebstoffpellets eine homogene Mischung aus filmbildender Polymerzusammensetzung und Schmelzklebstoffkern zu erhalten.

In verschiedenen Ausführungsformen enthält die filmbildende Zusammensetzung
a) 10 bis 20 Gew.-%, insbesondere 13-17 Gew.-%, mindestens eines Fischer-Tropsch-Wachses mit einem Schmelzpunkt >95 °C;
b) 40 bis 65 Gew.-%, insbesondere 55-65 Gew.-%, mindestens eines Metallocen-katalysierten Polyolefins, insbesondere Polypropylens, mit einem Erweichungspunkt >95°C und einem Schmelzflussindex (MFI) (230°C, 2,16kg) von ≤1000 und ≥300 g/10 Minuten;
c) 20 bis 40 Gew.-%, insbesondere 22-27 Gew.-%, mindestens eines Metallocen-katalysierten Polyolefins, insbesondere Polypropylens, mit einem Erweichungspunkt >85°C und einem Schmelzflussindex (MFI) (230°C, 2,16kg) von >1000 g/10 Minuten; und
d) 0 bis 2 Gew.-%, insbesondere 0,5 Gew.-% eines Antioxidationsmittels.

Das filmbildende Material hat in bevorzugten Ausführungsformen der Erfindung einen Schmelzpunkt von <130°C.

Im Folgenden wird das Kernmaterial genauer beschrieben.

Das Kernmaterial der Schmelzklebstoffe der vorliegenden Erfindung enthält mindestens ein thermoplastisches Polymer, insbesondere mindestens ein Polyolefin und mindestens ein klebrig machendes Harz. Die verwendeten Polymere sind vorzugsweise nicht reaktiv. Durch die Verwendung des klebrig machenden Harzes wird ein Schmelzklebstoff erhalten der eine Haftklebrigkeit der Oberfläche bei 25°C aufweist.

Beispiele für geeignete Polymere schließen ein, ohne darauf beschränkt zu sein, Polyethylen, Polypropylen und Copolymere davon sowie amorphe Poly-α-Olefine (APAO).

In verschiedenen Ausführungsformen der Erfindung sind die Basispolymere der Schmelzklebstoffzusammensetzung (Kernmaterial) ausgewählt aus Polyolefinen, Polyolefin-Copolymeren oder Polyolefin/alpha-Olefin-Interpolymeren, sowie amorphen Poly-alpha-Olefinen, wie ataktisches Propylen und Propylen-Copolymere mit Ethylen, Buten, Hexen und Octan, oder Ethylen bzw. Propylen-Homo- oder Copolymere und Mischungen der vorgenannten.

Die vorstehend beschriebenen Polymere sind für den Einsatz in haftklebrigen Schmelzklebstoffen bekannt und in unterschiedlichen Zusammensetzungen und Molekulargewichten im Handel erhältlich. Der Fachmann auf diesem Gebiet kann abhängig von dem gewünschten Einsatzgebiet geeignete thermoplastische Polymere, unter anderem in Bezug auf Schmelzpunkt, Viskosität oder Haftung, ohne weiteres auswählen.

Die genannten Polymere werden in den haftklebrigen Schmelzklebstoffen zusammen mit mindestens einem klebrig machenden Harz und gegebenenfalls auch mit mindestens einem Weichmacher formuliert.

Das Harz, das das Basispolymer klebrig machen soll, wird im Allgemeinen in einer Menge von 10 bis 60 Gew.-% eingesetzt, insbesondere 20 bis 60 Gew.-% jeweils bezogen auf die haftklebrige Schmelzklebstoffzusammensetzung, d.h. der Kernmaterial des erfindungsgemäßen Schmelzklebstoffs.

Es können im Prinzip die bekannten Harze, wie beispielsweise aromatische, aliphatische oder cycloaliphatische Kohlenwasserstoffharze, jeweils auch in voll oder teilweise hydrierter Form, sowie modifizierte oder hydrierte Naturharze eingesetzt werden. Geeignete im Rahmen der Erfindung anwendbare Harze schließen ein, ohne darauf beschränkt zu sein, Terpen-Harze, wie Terpolymere oder Copolymere des Terpens, Naturharze auf Kolophonium- oder Tallharzbasis inklusive ihrer Derivate, wie beispielsweise ihrer Pentaerythrol- oder Gylcerinester, andere modifizierte Naturharze wie Harzsäuren aus Balsamharz, Tallharz oder Wurzelharz, ggf. auch Hydroabietylalkohol und seine Ester, Acrylsäure-Copolymerisate, wie Styrol-Acrylsäure-Copolymere oder Copolymerisate aus Ethylen, Acrylatestern und Maleinsäureanhydrid, oder Harze auf Basis funktioneller Kohlenwasserstoffharze. Diese sind teilweise auch als Additive oder Zusatzstoffe einsetzbar.

Bei dem mindestens einen klebrig machenden Harz kann es sich um ein einzelnes Harz oder bevorzugt eine Harzmischung handelt.

In verschiedenen Ausführungsformen umfasst das Harz ein voll- oder teilhydriertes Kohlenwasserstoffharz und/oder mindestens ein Naturharz auf Kolophonium- oder Tallharzbasis oder eines Pentaerythrol- oder Gylcerinesters davon. Das mindestens eine voll- oder teilhydrierte Kohlenwasserstoffharz kann insbesondere ein aromatisch modifiziertes Harz, ein Polyterpen, ein Terpen-Phenolharz, ein 1,3-Pentadienharz, ein Cyclopentadienharz, ein 2-Methyl-2-Buten-Copolymer oder ein Derivat der vorgenannten umfassen.

Es ist bevorzugt, dass die klebrig machenden Harze einen Erweichungspunkt von etwa 80°C bis 150°C (Ring und Kugelmethode; ISO 4625 bzw. ASTM E28-58) aufweisen.

Ein weiterer Bestandteil, der in dem Schmelzklebstoff des Kerns enthalten sein kann, sind Weichmacher. Diese können ausgewählt werden aus Mineralölen, Poly(iso)butylen, flüssigen oder pastösen hydrierten Kohlenwasserstoffen und niedermolekularen Polyolefinen. Geeignete Weichmacher umfassen, sind aber nicht beschränkt auf medizinische Weißöle, naphthenische Mineralöle, Polypropylen-, Polybutylen-, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Dabei soll das Molekulargewicht von Polyalkylenglykolen oder Polybutylenoligomeren vorzugsweise im Bereich 200 bis 6 000 g/mol liegen, Polyolefine sollten ein Molekulargewicht bis etwa 2000 g/mol aufweisen, insbesondere bis 1000 g/mol.

Es können auch Ester als Weichmacher eingesetzt werden, z. B. flüssige Polyester und Glycerinester, wie Glycerindiacetat, Glycerintriacetat, Neopentylglykoldibenzoat, Glycerintribenzoat, Pentaerythritoltetrabenzoat und 1,4-Cyclohexandimethanoldibenzoat. Es können auch aromatische Dicarbonsäureester verwendet werden, wie beispielsweise Phthalsäure-, Isophthalsäure- oder Terephthalsäureester. Auch Sulfonsäureester oder Fettsäuren sind als Weichmacher einsetzbar.

Insbesondere sind Weißöle, mineralische Öle, Poly(iso)butylene und flüssige oder pastöse hydrierte Kohlenwasserstoffe bevorzugt.

Die Menge an Weichmachern in dem haftklebrigen Schmelzklebstoff sollte zwischen 0 bis 25 Gew.-%, insbesondere 5 bis 20 Gew.-% betragen. Ein zu hoher Anteil von Weichmachern führt zu verringerten kohäsiven Eigenschaften des Klebstoffs.

Gegebenenfalls können dem Schmelzklebstoff des Kerns auch Wachse in Mengen von 0 bis 20 Gew.-% zugegeben werden. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse eingesetzt werden oder Mineralwachse oder petrochemische Wachse. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse sowie synthetische Wachse eingesetzt. Besonders bevorzugt sind paraffinische und/oder mikrokristalline Wachse und/oder hydrierter Versionen davon, insbesondere Polypropylen- oder Polyethylenwachs mit einem Tropfpunkt bestimmt nach ASTM D-3954 von 130 bis 170°C.

Die erfindungsgemäßen Schmelzklebstoffe des Kerns können neben den oben genannten Bestandteilen noch weitere, üblicherweise in Schmelzklebstoffen eingesetzte Bestandteile als Additive enthalten. Hierzu zählen beispielsweise Stabilisatoren, Haftvermittler, Antioxidantien, Füllstoffe, Pigmente oder Kombinationen davon. Damit können bestimmte Eigenschaften des Klebstoffs, wie z. B. Kohäsion, Stabilität, Haftung oder Festigkeit beeinflusst werden. Die Menge der Additive und Zusatzstoffe kann vorzugsweise 0 bis 3 Gew.-%, typischerweise 0,1 bis 2 Gew.-% betragen. Besonders bevorzugte Additive schließen Stabilisatoren gegen thermischen und oxidativen Abbau und Abbau durch UV-Strahlung ein.

Additive, wie Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Der Schmelzklebstoff wird durch bekannte Verfahren durch Mischen in der Schmelze hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Harzbestandteile zugegeben. Es ist auch möglich und bevorzugt, den Schmelzklebstoff kontinuierlich in einem Extruder herzustellen. Der geeignete Schmelzklebstoff ist fest und, bis auf Verunreinigungen, im Wesentlichen frei von Lösemitteln.

Der Schmelzklebstoff des Kerns weist vorzugsweise einen Erweichungspunkt (Ring & Ball, ASTM E 28) von 65 bis 140°C, vorzugsweise bis zu 130°C, insbesondere weniger als 120°C auf.

Im Folgenden werden die Schmelzklebstoffpellets im Detail beschrieben.

Die filmbildende Polymerzusammensetzung bildet in verschiedenen Ausführungsformen einen im Wesentlichen kontinuierlichen Film, der den Schmelzklebstoffkern im Wesentlichen vollständig überzieht. Das kann dadurch erreicht werden, dass die filmbildende Zusammensetzung für die Auftragung über ihre Schmelztemperatur erhitzt und dann im geschmolzenen Zustand aufgetragen wird. Die Auftragung erfolgt vorzugsweise mittels Koextrusion. Die beiden Materialien der Hülle und des Kerns sind vorzugsweise derart kompatibel, dass sie beim Schmelzen eine stabile, homogene Mischung bilden. In einer Ausführungsform der Erfindung hat das Schalenmaterial einen Schmelzpunkt, der gleich dem Schmelzpunkt des Kernmaterials ist oder niedriger als dieser ist.

Die filmbildende Polymerzusammensetzung, wie oben definiert, bildet einen Überzug oder Film, der vorzugsweise bei einer Temperatur von 20°C bis zu 60°C nicht haftklebrig ist und den Klebstoffkern vor Einflüssen aus der Umgebung schützt. Bei der Applikation des erfindungsgemäßen Schmelzklebstoffs in Pelletform wird dieser geschmolzen, wobei eine homogene Mischung aus Schalen- und Kernmaterial entsteht. Dieser Prozess kann durch Mischvorrichtungen, wie statische oder dynamische Mischer, durch Pumpen beschleunigt werden. Die resultierende Schmelze ist ein homogener Haftklebstoff und wird in dieser flüssigen Form angewendet/aufgetragen.

Typischerweise hat der polymere Film eine Dicke im Bereich von 2 bis 200 µm, insbesondere 10 bis 100 µm, ganz besonders bevorzugt etwa 20 µm. Die Dicke des Films hängt aber auch von der Größe der Pellets ab. Die Menge des polymeren Films in dem Schmelzklebstoff in Pelletform beträgt daher üblicherweise bis zu 12 Gew.-%, vorzugsweise 1 bis 10 Gew.-%, noch bevorzugter 3 bis 8 Gew.-%, besonders bevorzugt 5 bis 7 Gew.-%, bezogen auf das Gesamtgewicht des Schmelzklebstoffpellets.

Wie bereits oben erwähnt werden die pellet-förmigen Schmelzklebstoffe der Erfindung vorzugsweise mittels Koextrusion hergestellt. In dem Koextrusionsverfahren werden der Schmelzklebstoff bzw. dessen Bestandteile in einer Mischvorrichtung geschmolzen und homogenisiert und danach durch eine Extruderöffnung oder -düse extrudiert. Die Düse kann jede herkömmliche Form haben, hat aber typischerweise eine spalt- oder kreis-förmige Öffnung, durch die die Zusammensetzung gepumpt wird. Die Extruderdüse wird dabei üblicherweise bei einer Temperatur über dem Schmelzpunkt des Materials gehalten, üblicherweise im Bereich von 80 bis 150°C. Bei der Koextrusion wird die filmbildende Polymerzusammensetzung gleichzeitig aus der Extruderdüse extrudiert und zwar in einer Art und Weise, dass es den zu umhüllenden Kern als kontinuierlicher Film im Wesentlichen umhüllt und somit den Schmelzklebstoff im Wesentlichen einschließt. Derartige Koextrusionsverfahren sowie die dazu eingesetzten Vorrichtungen sind im Stand der Technik bekannt.

In einer bevorzugten Ausführungsform erfolgt die Herstellung durch Formen der Pellets mit einer Quetschwalze im Kühlwasser in welches der Schmelzklebstoff und der polymere Film koextrudiert werden. Danach werden die einzelnen Pellets in einer Trockenzentrifuge voneinander getrennt. Dies ist ein dem Fachmann bekanntes Verfahren.

Nach dem Abkühlen können die Pellets für den Transport in einem Behälter, einer Kiste oder einem Beutel verpackt werden. Der Behälter kann aus einem mechanisch stabilen Material sein, so dass auch der Transport und die Handhabung von großen Mengen Pellets möglich sind.

Die Pellets sind vorzugsweise bei Temperaturen von 20°C bis 60°C nicht haftklebrig und können daher gelagert und transportiert werden ohne zu verkleben.

Die hierin beschriebenen Schmelzklebstoffpellets sind insbesondere als Haftklebstoffe (PSA, pressure sensitive adhesive) geeignet und werden für diesen Zweck verwendet. Einsatzgebiete sind beispielsweise das Verkleben von Folien miteinander oder mit anderen Substraten, wie Geweben oder Vliesstoffen, beispielsweise bei der Herstellung von Hygieneartikeln, insbesondere Baby-Windeln. Mit den Schmelzklebstoffen der Erfindung verklebte Produkte sind daher ebenfalls ein Bestandteil der Erfindung.

Bei der Verwendung der Schmelzklebstoffpellets der Erfindung werden diese üblicherweise in größeren Gebinden eingesetzt und in einem ersten Schritt in einer Fördervorrichtung gegeben, die die Pellets dann in die Schmelzvorrichtung transportiert. Bei dieser Fördervorrichtung kann es sich Förderschnecken, Förderbänder oder ähnliche handeln, wobei es aber bevorzugt ist, dass die Pellets mittels eines Gasstroms, beispielsweise Druckluft oder Unterdruck (Vakuum), transportiert werden. Da es bei einer solchen Förderung zu mechanischer Reibung zwischen der Partikeloberflächen kommt, verhindert auch hier die Beschichtung ein Verkleben und Verklumpen in der Fördervorrichtung. Die Erfindung betrifft daher auch Verfahren zur Beschickung einer Schmelzvorrichtung mit einem Schmelzklebstoff, umfassend Zuführung einer Vielzahl von Schmelzklebstoffpellets gemäß der Erfindung in die Schmelzvorrichtung mittels einer Fördervorrichtung, insbesondere Vakuumfördervorrichtung. Nach dem Schmelzen der Pellets in der Schmelzvorrichtung wird die Schmelze dann zu geeigneten Abgabevorrichtungen, beispielsweise Sprühdüsen oder Walzen, transportiert, üblicherweise gepumpt, und darüber auf das gewünschte zu verklebende Substrat aufgetragen.

Die hierin beschriebenen Schmelzklebstoffpellets können in automatisierten Verfahren zur Aufbringung des Schmelzklebstoffs der Schmelzklebstoffpellets eingesetzt werden.
Da die Pellets ein vergleichsweises kleines Volumen haben können, erlauben sie die einfache und gezielte Portionierung, beispielsweise in einer Fördervorrichtung. Dadurch kann die Menge an Klebstoff, die gleichzeitig in der Schmelzvorrichtung vorliegt, reduziert und somit lange Schmelzzeiten, eine Überdosierung oder lange Standzeiten in der Schmelzvorrichtung, die zum Abbau der Klebstoffbestandteile führen können, vermieden werden.

Die folgenden Beispiele dienen der Erläuterung der Erfindung, die Erfindung ist aber nicht darauf beschränkt.

### Beispiele

### Beispiel 1: Klebstoffformulierung

Es wurden filmbildende Zusammensetzungen hergestellt, die bezogen auf die Zusammensetzung die folgenden Bestandteile enthielten (in Gew.-%; E1 und E4 sind nicht erfindungsgemäss):

| | Konventionelle Beschichtung | E1 | E2 | E3 | E4 |
|---|---|---|---|---|---|
| Hochmolekulares Polyethylen, MFI 155 | 59,5 | - | - | - | - |
| Synthetisches Paraffinwachs | 20,0 | 15,0 | 15,0 | 15,0 | 20 |
| Metallocen-katalysiertes PP, MFI 2000 | 20,0 | 44,5 | 34,5 | 24,5 | - |
| Metallocen-katalysiertes PP, MFI 350 | - | 40,0 | 50,0 | 60,0 | 69,5 |
| Metallocen-katalysiertes PP, MFI 50 | - | - | - | - | 10 |
| Antioxidans | 0,5 | 0,5 | 0,5 | 0,5 | 0,5 |
| | | | | | |
| Viskosität (mPas bei 180°C) | 17120 | 14240 | 17200 | 21600 | 29300 |

| | | | | | |
|---|---|---|---|---|---|
| E = erfindungsgemäß Synthetisches Paraffinwachs: Sasolwax® H1 (Sasol) Metallocen-katalysiertes PP, MFI 2000: L-Modu™ S400 (Idemitsu Kosan Co., Ltd.), Erweichungspunkt 90°C, Mₙ 45.000 Metallocen-katalysiertes PP, MFI 350: L-Modu™ S600 (Idemitsu Kosan Co., Ltd.), Erweichungspunkt 100°C, Mₙ 70.000 Metallocen-katalysiertes PP, MFI 50: L-Modu™ S901 (Idemitsu Kosan Co., Ltd.), Erweichungspunkt 120°C, Mₙ 120.000 | | | | | |

### Beispiel 2: Rheologische Untersuchung

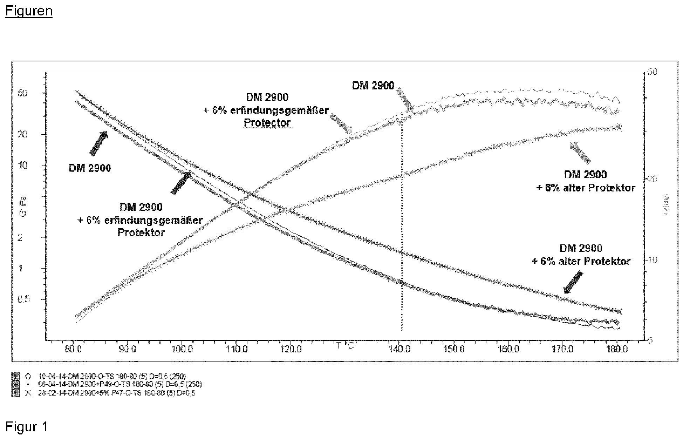

Im Folgenden wurden dann die rheologischen Eigenschaften der erfindungsgemäßen Formulierung E3 aus Beispiel 1 (in Figur 1 als DM 2900 + 6% erfindungsgemäßer Protektor bezeichnet) mit denen der konventionellen Formulierung aus Beispiel 1 verglichen (in Figur 1 als DM 2900 + 6% alter Protektor bezeichnet). Dazu wurden jeweils 6 Gew.-% der filmbildenden Zusammensetzung einem handelsüblichen Schmelzhaftklebstoff (Technomelt® DM2900, Henkel AG) zugesetzt und das Speichermodul G' bzw. das Verhältnis aus Verlustmodul (viskoses Modul) und Speichermodul (elastisches Modul) als Verlustfaktor (tan Δ) bestimmt.

Die Ergebnisse dieser Messungen sind in Figur 1 dargestellt. Die Ergebnisse zeigen deutlich, dass sich durch die Verwendung der erfindungsgemäßen filmbildenden Zusammensetzungen im Vergleich zu den bisher verwendeten Überzugsmaterialien keine Verschlechterung der Verarbeitbarkeit des Schmelzklebstoffs ergibt. Insbesondere konnte der Schmelzklebstoff bei derselben Temperatur verarbeitet (gesprüht) werden, wie beim Weglassen der filmbildenden Zusammensetzung, wohingegen bei der bekannten Überzugsformulierung eine Temperaturerhöhung um etwa 20°C notwendig war, um die Sprühbarkeit zu gewährleisten.

Diese rheologischen Untersuchungen wurden durch Praxistests bestätigt. Es wurde ebenfalls durch Praxistests bestätigt, dass das neuartige Hüllenmaterial keinen negativen Einfluss auf weitere wichtige Klebstoffparameter, insbesondere die Klebeeigenschaften, hat.

## Patentansprüche

1. Polymerzusammensetzung, **dadurch gekennzeichnet, dass** die Polymerzusammensetzung bezogen auf ihr Gesamtgewicht:
a) 5 bis 40 Gew.-% mindestens eines Fischer-Tropsch-Wachses mit einem Schmelzpunkt >95 °C;
b) 30 bis 70 Gew.-% mindestens eines Metallocen-katalysierten Polyolefins mit einem Erweichungspunkt >95°C und einem Schmelzflussindex (MFI) (230°C, 2,16kg) von ≤1000 und ≥300 g/10 Minuten;
c) 20 bis 40 Gew.-%, mindestens eines Metallocen-katalysierten Polyolefins mit einem Erweichungspunkt >85°C und einem Schmelzflussindex (MFI) (230°C, 2,16kg) von >1000 g/10 Minuten;
d) 0 bis 40 Gew.-% mindestens eines Metallocen-katalysierten Polyolefins mit einem Erweichungspunkt >115°C und einem Schmelzflussindex (MFI) (230°C, 2,16kg) von <300 g/10 Minuten;
e) 0 bis 60 Gew.-% mindestens eines Polyolefins das von b) bis d) verschieden ist, mit einem Molekulargewicht Mₙ <140.000 g/mol; und
f) 0 bis 20 Gew.-% Additive und Zusatzstoffe ausgewählt aus Antioxidantien, Stabilisatoren, Weichmachern und/oder anderen Polymeren umfasst,
wobei die Polymerzusammensetzung vorzugsweise bei einer Temperatur von 20°C bis 60°C nicht haftklebrig ist, und
wobei der Erweichungspunkt mittels Ring und Kugel Methode gemäß ISO 4625-1:2004 bestimmt wird.

2. Polymerzusammensetzung nach Anspruch 1, **dadurch gekennzeichnet, dass** das Fischer-Tropsch-Wachs ein synthetisches Paraffin ist.

3. Polymerzusammensetzung nach Anspruch 1 oder 2, **dadurch gekennzeichnet, dass** der Weichmacher ausgewählt wird aus Kohlenwasserstoffölen, insbesondere Paraffin-, naphthenischen und/oder Mineralölen, und Poly(iso)butylen.

4. Polymerzusammensetzung nach einem der Ansprüche 1 bis 3, **dadurch gekennzeichnet, dass** der Schmelzpunkt der Polymerzusammensetzung ≤130°C ist.

5. Polymerzusammensetzung nach einem der Ansprüche 1 bis 4, **dadurch gekennzeichnet, dass** die Polymerzusammensetzung bezogen auf ihr Gesamtgewicht:
a) 10 bis 20 Gew.-% mindestens eines Fischer-Tropsch-Wachses mit einem Schmelzpunkt >95 °C;
b) 40 bis 65 Gew.-% mindestens eines Metallocen-katalysierten Polyolefins mit einem Erweichungspunkt >95°C und einem Schmelzflussindex (MFI) (230°C, 2,16kg) von ≤1000 und ≥300 g/10 Minuten;
c) 20 bis 40 Gew.-% mindestens eines Metallocen-katalysierten Polyolefins mit einem Erweichungspunkt >85°C und einem Schmelzflussindex (MFI) (230°C, 2,16kg) von >1000 g/10 Minuten; und
d) 0 bis 2 Gew.-% eines Antioxidationsmittels
umfasst.

6. Schmelzklebstoff in Form eines Pellets, umfassend:
(1) einen Kern aus einem Schmelzklebstoff mit einem Erweichungspunkt von 65 bis 140°C, enthaltend mindestens ein Polyolefin und mindestens ein klebrig machendes Harz; und
(2) einen Film aus einer Polymerzusammensetzung gemäß einem der Ansprüche 1 bis 5, der den Kern im Wesentlichen vollständig umhüllt bei einer Temperatur von 20°C bis 60°C nicht haftklebrig ist.

7. Schmelzklebstoff nach Anspruch 6, **dadurch gekennzeichnet, dass** die Pellets
(1) jeweils ein Gewicht von weniger als 15 g haben; und/oder
(2) einen Durchmesser von weniger als 25 mm in jeder Dimension aufweisen; und/oder
(3) eine zylindrische, sphärische oder kissenförmige Form haben; und/oder
(4) durch Koextrusion des Kern- und des Films aus der Polymerzusammensetzung hergestellt werden.

8. Schmelzklebstoff nach Anspruch 6 oder 7, **dadurch gekennzeichnet, dass**
(a) der Film aus der Polymerzusammensetzung eine Dicke von 2 bis 200 µm, aufweist; und/oder
(b) der Schmelzklebstoff das Schalenmaterial in einer Menge von weniger als 12 Gew.-%, bezogen auf das Gesamtgewicht des Schmelzklebstoffs enthält.

9. Schmelzklebstoff nach einem der Ansprüche 6 bis 8, **dadurch gekennzeichnet, dass** es sich bei dem mindestens einen klebrig machenden Harz um ein Harz oder eine Harzmischung handelt, die mindestens ein voll- oder teilhydriertes Kohlenwasserstoffharz und/oder mindestens ein Naturharz auf Kolophonium- oder Tallharzbasis oder eines Pentaerythrol- oder Glycerinesters davon umfasst.

10. Schmelzklebstoff nach einem der Ansprüche 5 bis 9, **dadurch gekennzeichnet, dass**
(a) die Pellets bei einer Temperatur im Bereich von 20 bis 60°C nicht haftklebrig sind; und/oder
(b) die Pellets im geschmolzenen Zustand eine homogene Mischung bilden.

11. Verwendung eines Schmelzklebstoffs in Form von Pellets nach einem der Ansprüche 6 bis 10 als Haftklebstoff.

12. Verfahren zur Beschickung einer Schmelzvorrichtung mit einem Schmelzklebstoff, umfassend Zuführung eines oder mehrerer Schmelzklebstoffpellets nach einem der Ansprüche 6 bis 10 in die Schmelzvorrichtung mittels einer Fördervorrichtung.

## Claims

1. A polymer composition, **characterized in that** the polymer composition comprises, based on its total weight:
a) 5 to 40 wt.% of at least one Fischer-Tropsch wax having a melting point >95 °C;
b) 30 to 70 wt.% of at least one metallocene-catalyzed polyolefin having a softening point >95 °C and a melt flow index (MFI) (230 °C, 2.16 kg) of ≤1000 and ≥300 g/10 minutes;
c) 20 to 40 wt.% of at least one metallocene-catalyzed polyolefin having a softening point >85 °C and a melt flow index (MFI) (230 °C, 2.16 kg) of >1000 g/10 minutes;
d) 0 to 40 wt.% of at least one metallocene-catalyzed polyolefin having a softening point >115 °C and a melt flow index (MFI) (230 °C, 2.16 kg) of <300 g/10 minutes;
e) 0 to 60 wt.% of at least one polyolefin which is different from b) to d), having a molecular weight Mₙ <140,000 g/mol; and
f) 0 to 20 wt.% of additives and additional substances selected from antioxidants, stabilizers, plasticizers and/or other polymers,
the polymer composition preferably not being tacky at a temperature of 20 °C to 60 °C, and the softening point being determined by means of the ring-and-ball method according to ISO 4625-1:2004.

2. The polymer composition according to claim 1, **characterized in that** the Fischer-Tropsch wax is a synthetic paraffin.

3. The polymer composition according to claim 1 or 2, **characterized in that** the plasticizer is selected from hydrocarbon oils, in particular paraffin oils, naphthenic oils and/or mineral oils, and poly(iso)butylene.

4. The polymer composition according to one of claims 1 to 3, **characterized in that** the melting point of the polymer composition is ≤130 °C.

5. The polymer composition according to one of claims 1 to 4, **characterized in that** the polymer composition comprises, based on its total weight:
a) 10 to 20 wt.% of at least one Fischer-Tropsch wax having a melting point >95 °C;
b) 40 to 65 wt.% of at least one metallocene-catalyzed polyolefin having a softening point >95 °C and a melt flow index (MFI) (230 °C, 2.16 kg) of ≤1000 and ≥300 g/10 minutes;
c) 20 to 40 wt.% of at least one metallocene-catalyzed polyolefin having a softening point >85 °C and a melt flow index (MFI) (230 °C, 2.16 kg) of >1000 g/10 minutes; and
d) 0 to 2 wt.% of an antioxidant agent.

6. A hot melt adhesive in the form of a pellet, comprising:
(1) a core made of a hot melt adhesive having a softening point of 65 to 140 °C, containing at least one polyolefin and at least one tackifying resin; and
(2) a film consisting of a polymer composition according to one of claims 1 to 5, which film substantially completely envelops the core and is not tacky at a temperature of 20 °C to 60 °C.

7. The hot melt adhesive according to claim 6, **characterized in that** the pellets
(1) each have a weight of less than 15 g; and/or
(2) have a diameter of less than 25 mm in any dimension; and/or
(3) have a cylindrical, spherical or pillow shape; and/or
(4) are produced by coextruding the core and the film consisting of the polymer composition.

8. The hot melt adhesive according to claim 6 or 7, **characterized in that**
(a) the film of the polymer composition has a thickness of 2 to 200 µm; and/or
(b) the hot melt adhesive contains the shell material in an amount of less than 12 wt.%, based on the total weight of the hot melt adhesive.

9. The hot melt adhesive according to one of claims 6 to 8, **characterized in that** the at least one tackifying resin is a resin or resin mixture comprising at least one fully or partially hydrogenated hydrocarbon resin and/or at least one natural resin based on colophony or tall oil resin or a pentaerythritol or glycerol ester thereof.

10. The hot melt adhesive according to one of claims 5 to 9, **characterized in that**
(a) the pellets are not tacky at a temperature in the range of from 20 to 60 °C; and/or
(b) the pellets form a homogeneous mixture in the molten state.

11. The use of a hot melt adhesive in the form of pellets according to one of claims 6 to 10 as a pressure-sensitive adhesive.

12. A method for loading a melting device with a hot melt adhesive, comprising feeding one or more hot melt adhesive pellets according to one of claims 6 to 10 into the melting device by means of a conveying device.

## Revendications

1. Composition polymère, **caractérisée en ce que** la composition polymère comprend, sur la base de son poids total :
a) 5 à 40 % en poids d'au moins une cire Fischer-Tropsch avec un point de fusion > 95 °C ;
b) 30 à 70 % en poids d'au moins une polyoléfine catalysée par métallocène avec un point de ramollissement > 95 °C et un indice de fluidité à chaud (MFI) (230 °C, 2,16 kg) ≤ 1000 et ≥ 300 g/10 minutes ;
c) 20 à 40 % en poids d'au moins une polyoléfine catalysée par métallocène avec un point de ramollissement > 85 °C et un indice de fluidité à chaud (MFI) (230 °C, 2,16 kg) > 1000 g/10 minutes ;
d) 0 à 40 % en poids d'au moins une polyoléfine catalysée par métallocène avec un point de ramollissement > 115 °C et un indice de fluidité à chaud (MFI) (230 °C, 2,16 kg) < 300 g/10 minutes ;
e) 0 à 60 % en poids d'au moins une polyoléfine différente de b) à d), avec un poids moléculaire Mₙ < 140 000 g/mol ; et
f) 0 à 20 % en poids d'additifs et d'adjuvants choisis parmi les antioxydants, stabilisants, plastifiants et/ou autres polymères,
la composition polymère n'étant de préférence pas adhésive à une température de 20 °C à 60 °C, et le point de ramollissement étant déterminé au moyen de la méthode de l'anneau et de la bille selon ISO 4625-1:2004.

2. Composition polymère selon la revendication 1, **caractérisée en ce que** la cire Fischer-Tropsch est une paraffine synthétique.

3. Composition polymère selon la revendication 1 ou 2, **caractérisée en ce que** le plastifiant est choisi parmi les huiles hydrocarbonées, en particulier les huiles de paraffine, naphténiques et/ou minérales, et le poly(iso)butylène.

4. Composition polymère selon l'une des revendications 1 à 3, **caractérisée** en ce le point de fusion de la composition polymère est ≤ 130 °C.

5. Composition polymère selon l'une des revendications 1 à 4, **caractérisée** en ce la composition polymère comprend, sur la base de son poids total :
a) 10 à 20 % en poids d'au moins une cire Fischer-Tropsch avec un point de fusion > 95 °C ;
b) 40 à 65 % en poids d'au moins une polyoléfine catalysée par métallocène avec un point de ramollissement > 95 °C et un indice de fluidité à chaud (MFI) (230 °C, 2,16 kg) ≤ 1000 et ≥ 300 g/10 minutes ;
c) 20 à 40 % en poids d'au moins une polyoléfine catalysée par métallocène avec un point de ramollissement > 85 °C et un indice de fluidité à chaud (MFI) (230 °C, 2,16 kg) > 1000 g/10 minutes ; et
d) 0 à 2 % en poids d'un antioxydant.

6. Adhésif thermofusible sous forme de pastille, comprenant :
(1) un noyau constitué d'un adhésif thermofusible avec un point de ramollissement de 65 à 140 °C, contenant au moins une polyoléfine et au moins une résine conférant de l'adhésivité ; et
(2) un film constitué d'une composition polymère selon l'une des revendications 1 à 5 qui enveloppe sensiblement complètement le noyau et n'est pas adhésif à une température de 20 °C à 60 °C.

7. Adhésif thermofusible selon la revendication 6, **caractérisé en ce que** les pastilles
(1) possèdent respectivement un poids inférieur à 15 g ; et/ou
(2) présentent un diamètre inférieur à 25 mm dans chaque dimension ; et/ou
(3) possèdent une forme cylindrique, sphérique ou en coussinet ; et/ou
(4) sont réalisées par coextrusion du noyau et du film de la composition polymère.

8. Adhésif thermofusible selon la revendication 6 ou 7, **caractérisé en ce que**
(a) le film de la composition polymère présente une épaisseur de 2 à 200 µm ; et/ou
(b) l'adhésif thermofusible contient le matériau d'enveloppe en une quantité inférieure à 12 % en poids, sur la base du poids total de l'adhésif thermofusible.

9. Adhésif thermofusible selon l'une des revendications 6 à 8, **caractérisé en ce que** l'au moins une résine adhésive est constituée de résine ou d'un mélange de résines comprenant au moins une résine hydrocarbonée totalement ou partiellement hydrogénée et/ou au moins une résine naturelle à base de colophane ou de résine d'huile de pin ou un ester de glycérol ou de pentaérythritol de celle-ci.

10. Adhésif thermofusible selon l'une des revendications 5 à 9, **caractérisé en ce que**
(a) les pastilles ne sont pas adhésives à une température comprise entre 20 et 60 °C ; et/ou
(b) les pastilles forment un mélange homogène à l'état fondu.

11. Utilisation d'un adhésif thermofusible sous forme de pastilles selon l'une des revendications 6 à 10 en tant qu'adhésif sensible à la pression.

12. Procédé permettant de charger un dispositif de fusion avec un adhésif thermofusible, comprenant l'introduction d'une ou plusieurs pastilles d'adhésif thermofusible selon l'une des revendications 6 à 10 dans le dispositif de fusion au moyen d'un dispositif de transport.
